# FASCICULE DE BREVET EUROPEEN

(11) **EP 1 988 015 B1**
(45) Date de publication et mention de la délivrance du brevet: **02.02.2011**
(21) Numéro de dépôt: 08290393.1
(22) Date de dépôt: 22.04.2008
(51) Int. Cl.: B64C 25/26

(54) **Dispositif de verrouillage de contreventement pour atterrisseur d'aéronef**
Vorrichtung zur Blockierung der Aussteifung für ein Fahrgestell eines Luftschiffs
Bracing locking device for an aircraft landing gear

(30) Priorité: 03.05.2007 FR 0703175
(43) Date de publication de la demande: 05.11.2008
(73) Titulaire: Messier-Dowty SA, 78140 Velizy Villacoublay (FR)
(72) Inventeur: Seror-Goguet, Christelle, 92350 Le Plessis Robinson (FR); Martinez, Laurent, 28130 Maintenon (FR)
(74) Mandataire: Parzy, Benjamin Alain

(56) Documents cités:
- GB-A- 644 147
- GB-A- 704 080
- US-A- 2 661 171
- US-A- 5 022 609

## Description

L'invention concerne un dispositif de verrouillage de contrefiche pour atterrisseur d'aéronef.

### ARRIERE-PLAN DE L'INVENTION

Les atterrisseurs sont en général montés articulés sur l'aéronef entre une position déployée et une position escamotée. Pour stabiliser un atterrisseur dans la position déployée, il est connu d'employer un organe de contreventement ou contrefiche.

A cet égard, on connaît des contrefiches, selon les caractéristiques du préambule de la revendication indépendante, dites briseuses comportant deux bielles articulées entre elles par le moyen d'une articulation centrale ou genou, l'une des bielles ayant une extrémité articulée sur l'atterrisseur tandis que l'autre des bielles a une extrémité articulée à la structure de l'aéronef. Un organe de stabilisation maintient les deux bielles alignées lorsque l'atterrisseur est en position déployée, ce qui stabilise l'atterrisseur. Par contre, lorsque l'atterrisseur s'escamote, l'organe de stabilisation permet la libre articulation des bielles au niveau du genou, ce qui permet le repliement de la contrefiche et l'escamotage de l'atterrisseur.

De façon classique, l'organe de stabilisation comporte lui-même deux bras articulés entre eux, l'un des bras ayant une extrémité articulée à l'un des bras de contrefiche, et l'autre des bras ayant une extrémité articulée à la structure de l'aéronef. Des butées définissent une position de verrouillage dans laquelle lesdits bras sont sensiblement alignés. Un organe ressort maintient les bras de l'organe de stabilisation dans la position de verrouillage. L'ensemble forme un dispositif de verrouillage qui permet de maintenir la contrefiche en position alignée.

Un actionneur de déverrouillage, travaillant à l'encontre des ressorts, permet de briser l'alignement des bras de l'organe de stabilisation, et ainsi permettre le repliement de la contrefiche.

L'art antérieur est notamment illustré par les documents US2661171, GB704080 , GB644147 et US5022609qui représente l'état de la technique le plus pertinent selon les caractéristiques du préambule de la revendication indépendante.

### OBJET DE L'INVENTION

L'invention a pour objet un nouveau dispositif de contreventement, permettant de limiter la course de l'organe ressort.

### BREVE DESCRIPTION DE L'INVENTION

Selon l'invention, on propose un dispositif de contreventement pour atterrisseur d'aéronef, comportant :
- une contrefiche à deux bielles articulées mobile entre une position repliée et une position de stabilisation de l'atterrisseur en position déployée ;
- un organe de stabilisation de la contrefiche comportant deux bras articulés entre eux, l'un des bras ayant une extrémité articulée sur la contrefiche selon un axe d'articulation, les deux bras présentant entre eux une butée pour définir une position de verrouillage des bras dans laquelle la contrefiche en maintenue position de stabilisation ;
- un organe ressort pour rappeler les bras de l'organe de stabilisation vers la position de verrouillage ;
dans lequel, selon l'invention, l'organe ressort est attelé à un levier articulé sur la contrefiche, le levier présentant une lumière dans laquelle un doigt solidaire du bras articulé sur la contrefiche est engagé, le levier étant mobile entre :
- une position de confirmation dans laquelle le doigt est engagé dans une partie de retour de la lumière, alors que l'organe de stabilisation est en position de verrouillage ;
- une position de libération dans lequel le doigt est engagé dans une partie courbe de la lumière qui s'étend selon un arc de cercle centré sur l'axe d'articulation, alors que l'organe de stabilisation n'est pas en position de verrouillage.

Ainsi, la partie courbe de la lumière s'étendant selon un arc de cercle centré sur l'articulation du bras de l'organe de stabilisation, le levier ne bouge donc plus quelle que soit la position angulaire du bras de l'organe de stabilisation vis-à-vis de la contrefiche. La course du ressort est ainsi limitée, ce qui diminue les sollicitations du ressort et en augmente sa durée de vie.

### BREVE DESCRIPTION DES DESSINS

L'invention sera mieux comprise à la lumière de la description qui suit en référence aux figures des dessins annexés parmi lesquelles :
- la figure 1 est une vue de face d'une contrefiche selon l'invention, alors que la contrefiche est dans la position de stabilisation ;
- la figure 2 est une vue partielle agrandie de la figure 1 ;

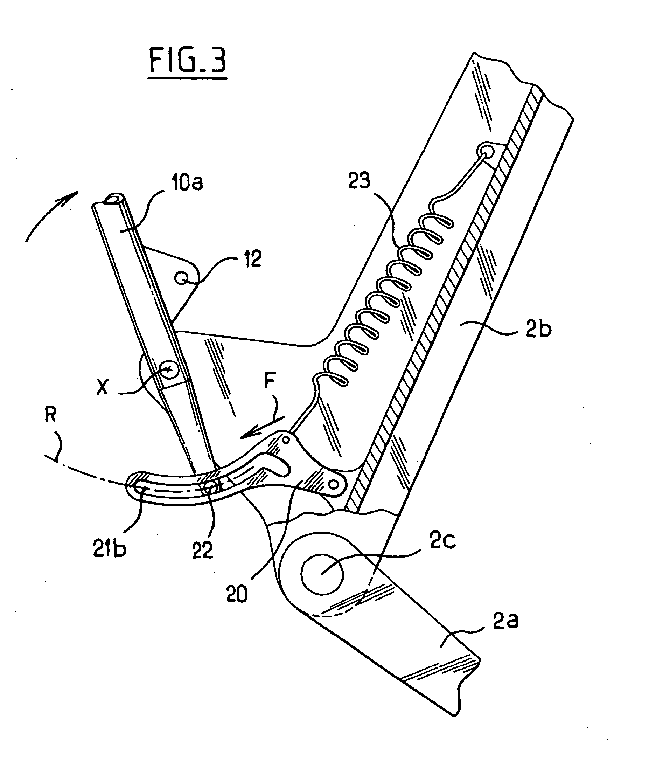

- la figure 3 est une vue analogue à la figure 2, illustrant une situation dans laquelle la contrefiche n'est pas dans la position de stabilisation.

### DESCRIPTION DETAILLEE DE L'INVENTION

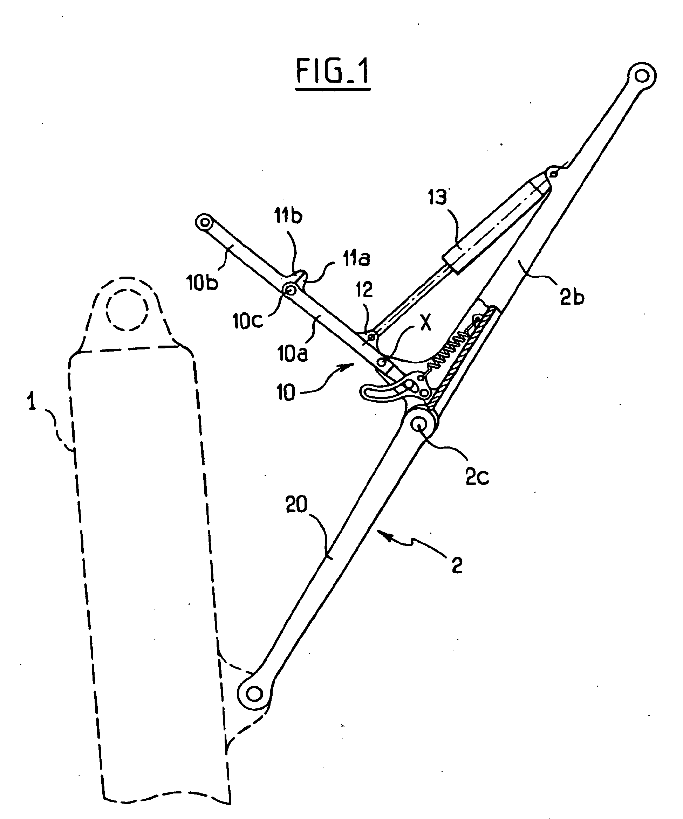

En référence à la figure 1, le dispositif de contreventement illustré ici est destiné à stabiliser en position déployée un atterrisseur 1 d'aéronef. Le dispositif comporte une contrefiche 2 qui comprend une bielle inférieure 2a articulé sur l'atterrisseur 1 et une bielle supérieure 2b articulé sur la structure de l'aéronef. Les bielles 2a, 2b sont articulées entre elles par une articulation centrale ou genou 2c.

Un organe de stabilisation 10 permet de maintenir les bielles 2a, 2b sensiblement alignées de sorte que l'atterrisseur est stabilisé dans la position déployée. Pour la suite, cette position sensiblement alignée est appelée position alignée, ou position de stabilisation de l'atterrisseur en position déployée.

L'organe de stabilisation comporte un bras inférieur 10a articulé sur la bielle supérieure 2b de la contrefiche selon un axe d'articulation X, et un bras supérieur 10b articulé à la structure de l'aéronef. Les bras sont articulés entre eux par une articulation centrale 10c. Les bras 10a, 10b sont pourvus de butées 11a, 11b qui coopèrent pour définir une position de verrouillage des bras dans laquelle les bras 10a, 10b sont sensiblement alignés.

Le bras inférieur 10a est munie d'une attache 12 pour recevoir l'extrémité d'un vérin de déverrouillage 13 qui, lorsqu'il est commandé en rétraction, brise l'alignement des bras 10a, 10b, ce qui permet le repliement de la contrefiche.

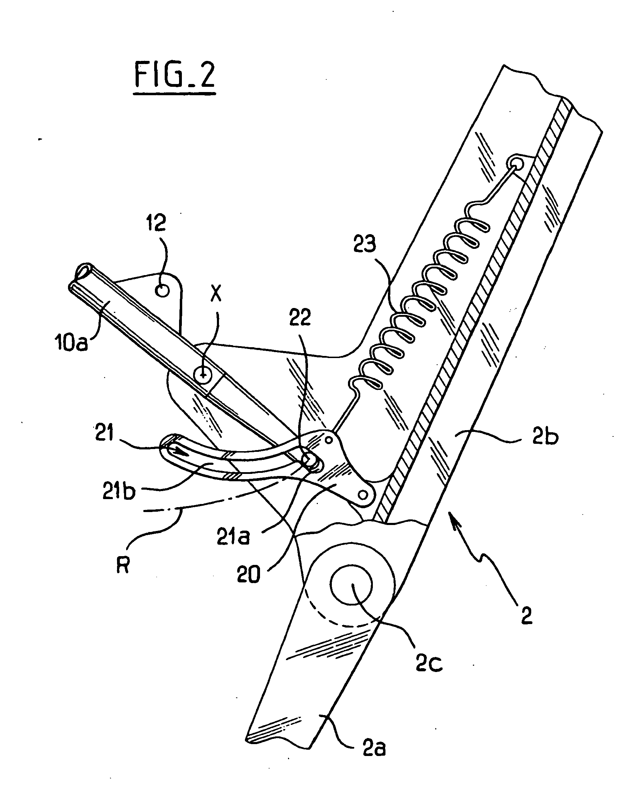

Par ailleurs, l'organe de stabilisation comporte un organe de confirmation des bras 10a, 10b dans la position de verrouillage, qui est maintenant détaillé en relation avec la figure 2.

L'organe de confirmation comporte un levier 20 articulé sur la bielle supérieure 2b de la contrefiche. Le levier comporte une lumière 21 comportant une partie de retour 21a et une partie courbe 21b. Un doigt 22 solidaire d'une extrémité du bras inférieur 10a est engagé dans la lumière 21. Un organe ressort 23 est attelé entre le levier 21 et la bielle supérieure 2a de la contrefiche 2. L'organe ressort 23 travaille ici en traction.

Le fonctionnement du dispositif de contreventement est le suivant. Dans la position illustrée à la figure 2, le doigt 22 est engagé dans la partie de retour 21a de la lumière 21. Cette partie présente une face d'appui sensiblement parallèle à une ligne passant entre l'axe d'articulation X du bras inférieur 10a et l'articulation du levier. L'organe ressort 23 tire sur le levier 20, qui appuie sur le doigt 22 de façon à confirmer les butées 11a, 11b l'une contre l'autre, ce qui tend donc à confirmer les bras en position de verrouillage. En l'absence d'action du vérin de déverrouillage 13, la contrefiche 2 est donc maintenue en position alignée. On appellera cette position du levier position de confirmation.

Lorsque l'on a besoin d'escamoter l'atterrisseur, il convient de briser l'alignement des bielles 2a, 2b de la contrefiche. Pour ce faire, il convient tout d'abord de briser l'alignement des bras 10a, 10b de l'organe de stabilisation. A cet effet, on actionne le vérin de déverrouillage 13 pour qu'il se rétracte, ce qui a pour effet faire pivoter le bras inférieur 10a autour de l'articulation X dans un sens tendant ici à coucher le bras inférieur 10a sur la bielle supérieure 2b.

Ce faisant, le doigt 22 repousse le levier 20 dans la direction de la flèche F à l'encontre de l'organe ressort 23 qui s'allonge, jusqu'à ce que le doigt 21 pénètre dans la partie courbe 21b de la lumière 21. Dans cette position, la partie courbe 21b s'étend alors selon un arc de cercle R (illustré en traits mixtes) centré sur l'axe d'articulation X. Le bras inférieur 10a peut alors continuer à pivoter de sorte que le doigt 22 se déplace dans la partie courbe 21b de la lumière 21. Cependant, le levier 20 ne pivote plus, de sorte que l'organe ressort 23 ne s'allonge plus. L'effort qu'il exerce est ainsi limité à une valeur fixe, indépendante de la position angulaire du bras inférieur 10a vis-à-vis de la bielle supérieure 2b. La position correspondante du levier est appelée position de libération.

Dans les cinématiques classiques dans lesquelles l'organe ressort est directement attelé au bras inférieur 10b, l'organe ressort continuerait à s'allonger, de sorte qu'il subirait des efforts importants, qui s'opposent en pratique à l'escamotage de l'atterrisseur.

## Revendications

1. Dispositif de contreventement pour atterrisseur d'aéronef, comportant :
- une contrefiche (2a,2b) articulée mobile entre une position repliée et une position de stabilisation de l'atterrisseur en position déployée ;
- un organe de stabilisation (10a, 10b, 20, 23) de la contrefiche comportant deux bras (10a, 10b) articulés entre eux, l'un des bras ayant une extrémité articulée sur la contrefiche selon un axe d'articulation (X), des butées (11a, 11b) définissant une position de verrouillage des bras dans laquelle la contrefiche en maintenue en position de stabilisation ;
- un organe ressort (23) pour rappeler les bras de l'organe de stabilisation vers la position de verrouillage ;
**Caractérisé en ce que** l'organe ressort est attelé à un levier (20) articulé sur la contrefiche, le levier présentant une lumière (21) dans laquelle un doigt (22) solidaire du bras (10a) articulé sur la contrefiche est engagé, le levier étant mobile entre :
- une position de confirmation dans laquelle le doigt est engagé dans une partie de retour (21a) de la lumière, alors que l'organe de stabilisation est en position de verrouillage, le levier coopérant avec le doigt pour confirmer l'organe de stabilisation dans la position de verrouillage ;
- une position de libération dans lequel le doigt est engagé dans une partie courbe (21b) de la lumière qui s'étend selon un arc de cercle centré sur l'axe d'articulation (X), alors que l'organe de stabilisation n'est pas en position de verrouillage.

## Claims

1. A wind-brace device for an aircraft undercarriage, the device comprising:
a hinged brace movable between a folded position and a stabilization position for stabilizing the undercarriage in the deployed position;
a stabilizer member for stabilizing the brace and comprising two hinged-together arms, one of the arms having one end hinged to the brace about a hinge axis, and abutments defining a locked position of the arms in which the brace is held in the stabilization position; and
· a spring member for returning the arms of the stabilizer member towards the locked position;
wherein the spring member is connected to a lever hinged to the brace, the lever presenting a slot in which there is engaged a finger secured to the arm that is hinged to the brace, the lever being movable between:
· a confirmation position in which the finger is engaged in an turned-back portion of the slot, while the stabilizer member is in the locked position, the lever co-operating with the finger to confirm that the stabilizer member is in the locked position; and
· a release position in which the finger is engaged in a curved portion of the slot that extends along a circular arc centered on the hinge axis, while the stabilizer member is not in the locked position.

## Patentansprüche

1. Aussteifungsvorrichtung für ein Flugzeugfahrwerk, umfassend:
- eine angelenkte Strebe (2a, 2b), die zwischen einer eingeklappten Stellung und einer Stabilisierungsstellung zur Stabilisierung des Fahrwerks in ausfahrener Stellung beweglich ist,
- ein Stabilisierungselement (10a, 10b, 20, 23) zur Stabilisierung der Strebe, das zwei aneinander angelenkte Arme (10,a, 10b) umfasst, wobei einer der Arme ein Ende hat, das an der Strebe um eine Gelenkachse (X) angelenkt ist, wobei Anschläge (11a, 11b) eine Verriegelungsstellung der Arme definieren, in der die Strebe in der Stabilisierungsstellung gehalten wird,
- ein Federelement (23) zum Rückstellen der Arme des Stabilisierungselements in die Verriegelungsstellung,
**dadurch gekennzeichnet, dass** das Federelement an einen Hebel (20) gekoppelt ist, der an der Strebe angelenkt ist, wobei der Hebel ein Schlitzloch (21) aufweist, mit dem ein Zapfen (22), der fest mit dem an der Strebe angelenkten Arm (10a) verbunden ist, in Eingriff steht, wobei der Hebel beweglich ist zwischen:
- einer Haltestellung, in der der Zapfen mit einem Rücklaufabschnitt (21 a) des Schlitzloches in Eingriff steht, während das Stabilisierungselement in der Verriegelungsstellung ist, wobei der Hebel mit dem Zapfen zusammenwirkt, um das Stabilisierungselement in der Verriegelungsstellung zu halten, und
- einer Freigabestellung, in der der Zapfen mit einem gebogenen Abschnitt (21b) des Schlitzloches in Eingriff steht, der sich gemäß einem Kreisbogen erstreckt, der auf die Gelenkachse (X) zentriert ist, während das Stabilisierungselement nicht in der Verriegelungsstellung ist.
